# EUROPEAN PATENT APPLICATION

(11) **EP 1 473 230 A2**
(43) Date of publication of application: **03.11.2004**
(21) Application number: 04076190.0
(22) Date of filing: 20.04.2004
(51) Int. Cl.: B65B 9/02, B65B 51/26

(54) **Flow packing machine of products in bags fitted with breakable partition**

(30) Priority: 29.04.2003 IT MI20030865
(71) Applicant: ILAPAK Research & Development S.A., CH-6926 Montagnola (CH)
(72) Inventor: Tinivella, Valter, 21052 Busto Arsizio (VA) (IT)
(74) Representative: Faraggiana, Vittorio, Dr. Ing.

(57) **Abstract**

A machine for packing products in a sequence of bags (20) made from sealed films (17, 18), with each bag comprising two chambers separated from each other by a breakable partition (43). The machine comprises in combination a first compartment (13) of first products (12) destined to be received in one of the two chambers of each bag and a second compartment (33) of second products destined to be received in the other of the two chambers of each bag. The film passes between rollers of pairs of sealing rollers (15, 16) to be sealed longitudinally at the two side edges and in an intermediate position between the edges. One pair of rollers has three sealing blades (36, 38) to carry out the side sealings and the intermediate sealing (37), and the other pair of rollers having two sealing blades (39, 40) also to carry out said side sealings and to make the final side sealings more resistant than said intermediate sealing which thus forms said breakable partition.

## Description

The present invention refers to an innovative packing machine of the type for packing products in a sequence of bags made from sealed films. In particular the machine is suitable for packing in bags each one of which comprise at least two chambers separated from each other by a breakable partition.

In the prior art packs made from two layers of film sealed to form a bag with internal space divided into two chambers separated by a breakable sealing are known. Each chamber contains a product, which before being used has to be kept separated from the product in the other chamber. Instead, upon being used the two products must come into contact with each other, by means of the seal being broken, without an opening being made externally however, which if required must be made later on.

For example, this type of packing is used for packing internal female tampons. The tampon is sealed in one chamber of the bag and a suitable lubricant is sealed in the other chamber. Immediately before the application of the tampon the user must break the seal between the chambers, so that the tampon comes into contact with the lubricant. After this the pack can be opened and the tampon can be applied.

The problem with these packs is to obtain perimetric closing sealings of the bag and breakable sealing with resistance to the separation of the two layers of the films calibrated with the necessary precision and repeatability to meet needs, which are in contrast with each other. In fact inconvenient perimetric opening must be prevented from occurring during the application of the force needed to cause the intermediate sealing to break. However the untimely breaking of the breakable sealing during the normal manipulation of the pack must also be avoided. Finally, the force needed to break the various sealings must be such that they do not cause damage to the products contained in the pack, products that can also be quite delicate.

The main aim of the present invention is to produce a packing machine that meets the above mentioned needs, avoids the inconveniences of the known technique, and that has high productivity and efficiency.

In view of this aim the intention was to make, according to the invention, a machine for packing products in a sequence of bags made from sealed films, with each bag fitted with two chambers separated from each other by a breakable partition, comprising in combination a first compartment of first products destined to be received in one of the two chambers of each bag, a second compartment of second products destined to be received in the other of the two chambers of each bag, first and second devices for feeding respectively the first and the second products from their own compartments to a packing area, longitudinal film sealing means to make side sealings and an intermediate sealing between them, all extended in the feeding direction of the film, and transversal film sealing means at intervals between the bags; the longitudinal sealing means comprise a first pair of sealing rollers and a second pair of sealing rollers placed in sequence along the path of the film, the film passing between the rollers of the pairs in two overlaying layers to be sealed longitudinally, one pair of rollers having three sealing blades to carry out said side sealings and said intermediate sealing, and the other pair of rollers having two sealing blades so that it too can carry out said side sealings and make the final side sealings more resistant than said intermediate sealing which thus makes said breakable partition.

To clarify the explanation of the innovative principles of the present invention and its advantages compared to the known technique, a possible embodiment applying such principles is hereunder described, with the aid of the enclosed drawings. In the drawings:
- Figure 1 represents a schematic view, in a partially sectioned side elevation, of a machine according to the invention;
- Figure 2 represents a partial schematic upper view of a first pair of sealing rollers of the machine of Figure 1;
- Figure 3 represents a partial schematic upper view of a second pair of sealing rollers of the machine of Figure 1;
- Figure 4 represents a front schematic view of the action of the two pairs of rollers to produce two-chamber bags starting from two layers of heat-sealable film.

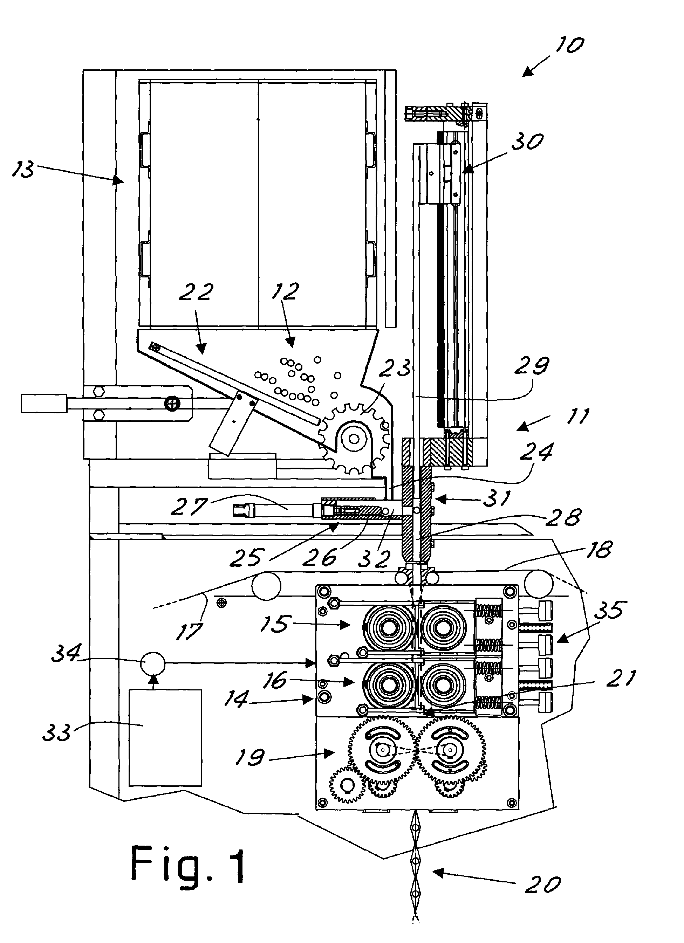

With reference to the figures, Figure 1 shows a packing machine, indicated generically with 10, for packing products in a sequence of bags made from sealed films, each bag comprising two chambers separated from each other by a breakable partition. The machine comprises a first compartment 13 of first products 12 destined to be received in one of the two chambers of each bag, and a second compartment 33 of second products destined to be received in the other of the two chambers of each bag. The products can both be solid or both fluid or one solid and one fluid.

The machine comprises first feeding devices 11 that withdraw the products 12 from the compartment 13, and second feeding devices 34 that withdraw the product from the compartment 33. The products withdrawn are sent to a packing area 21 inside a sealing unit 14, which, as will be clarified hereunder, produces the bags starting from the heat-sealable films 17, 18 fed into the machine.

The structure of the feeding devices of the products will depend on the specific characteristics of the products themselves. In particular, in the preferred embodiment shown, the products 12 in the compartment 13 are internal female tampons, of a generically elongated cylindrical shape and the product in the compartment 33 is a suitable known fluid lubricant.

In this case, the device 34 will be for example formed by a suitable pump with dosing means for the liquid product.

The compartment 13 for the solid elongated products can be advantageously made with a hopper fitted with a pneumatic beater or a vibrator with eccentric masses 22 and a sorting drum 23, fitted with peripheric grooves which, when the drum rotates, guide the products to be then supplied sequentially to the outfeed 24 of the compartment.

To ensure precise feeding of the products 12 it has found to be advantageous to make the feeding devices 11 in the form of a first horizontal box feeder 25, or preparation feeder, which has a box or push skid 26 moved reciprocally upon command by an actuator 27 to push a product (that falls into it from the hopper) along the channel 32 until it enters a vertical channel 28 that ends in the packing area. This channel thus penetrates suitably inside the tube of sealed film, extending longitudinally into it.

Above, the channel is fitted with a second push box or skid 29 moved reciprocally upon command by means of a suitable skid actuator 30 to make a second box feeder or insertion feeder 31 that pushes the product from the input point in the channel 28 up to the end of the channel itself. Advantageously, the dimensions of the channel 28 are such that they receive the product with minimum side clearance (anti-fall elastic elements can also be provided for, not shown) so that it remains in the feeding orientation while the skid 29 of the second feeder descends to push the product up to the packing position 21. The two-box system described above has been found to be particularly effective in the case of products with relatively high compliance in the transversal direction to their extension, as it ensures precise and reliable feeding of only one product at a time.

The sealing and packing unit 14 comprises means 15, 16 for the longitudinal sealing of the two bands 17, 18 and means 19 of transversal sealing at intervals between the bags, so as to obtain a chain of finished bags 20, with the products in the correct chambers. A known cutting system can also be supplied (not shown) for the separation of the bags formed in this manner.

The transversal sealing means 19 are of the known type (for example with rotating sealing blades) and therefore will not be further shown or described, being easily imaginable by the expert technician.

The longitudinal sealing means comprise a first and a second pair of sealing rollers 15, 16. The two pairs are positioned in sequence along the path of the film, so that the film passes between the rollers of the pairs in two layers or overlaying strips to be sealed longitudinally. The sealing pressure of each pair is regulated independently through known adjusting means 35.

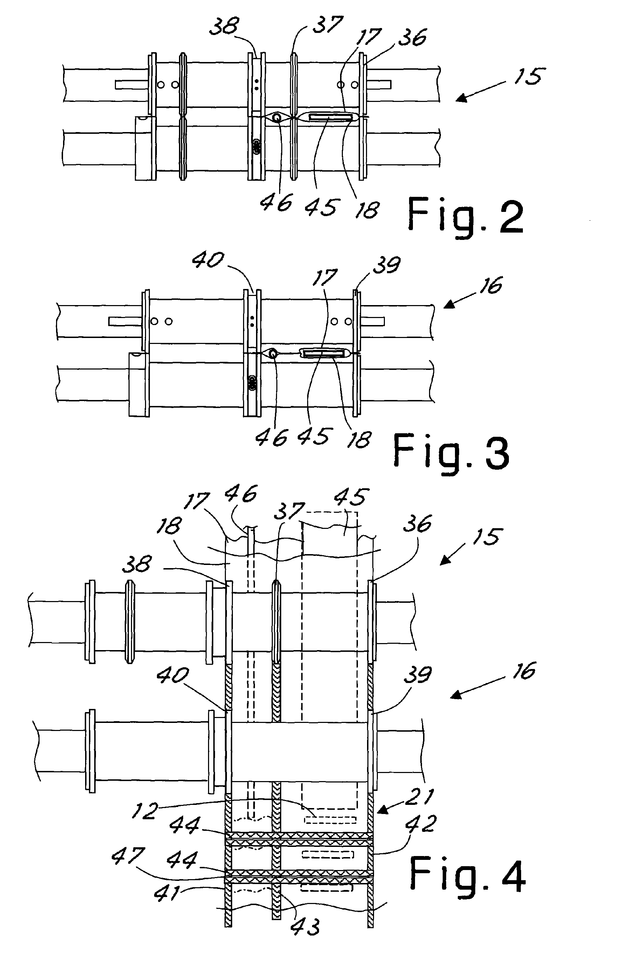

As can be seen well in Figure 2, one of the two pairs of rollers (in the preferred embodiment the first pair 15 met by film) is fitted with three circumferential sealing blades or rings 36, 37, 38 to carry out the side sealings and the intermediate sealing in the flow direction of the film. The pair of rollers that carries out the three sealings has sealing parameters (in particular the pressure between facing blades given by the adjusting system 35) such that the three sealing are made with the strength requested for the breakable sealing between the chambers of each bag.

As can be seen in Figure 3, the other pair of rollers (in the preferred embodiment the second pair 16 met by film) has only two circumferential blades or sealing rings 39, 40 to carry out itself the side sealings. As in this manner the side sealings are carried out twice, they will be more resistant than the intermediate sealing. The sealing parameters (in particular the pressure between facing blades given by the adjusting system 35) of the second pair of rollers will be such to obtain the required final resistance of the side sealings.

The two layers of film 17, 18 arrive at the outfeed of the second pair of rollers sealed longitudinally, as shown in Figure 4, with the side sealings 41, 42 and the intermediate breakable sealing 43 all of the required consistency.

The sealed film thus arrives at the packing area 21 downstream from which the sealing blades of the means 19 carry out the transversal sealing 44 with the strength suited to the peripheric closing of the bag, contemporarily forming the head and the bottom of the two-chamber bag.

As can be seen again in Figure 4, the channel 28 ends in the packing area, between the sealings 41 and 43, extended by means of a duct 45 that passes between the rollers in the flow direction of the film. A product 12 is thus fed into the packing area in one of the chambers of the bag being formed.

The side sealing prevents the product from descending even further.

Between the sealings 42, 43 that form the other chamber a terminal duct 46 is inserted that ends in the packing area and is fed by feeding devices 34 of the other product (in the specific case a fluid) such that the second product is fed into the other chamber of the bag being formed.

When the film advances, cutting blades present inside the means 19 carry out a cut 47 so as to separate the bags from each other.

It is clear at this point how the aims of the discovered invention are reached.

The particular structure of the sealing unit enables precise, repeatable and reliable sealing to be obtained, both peripheric and intermediate, with the required differentiated strengths. In addition, the formation at the same time of peripheric sealings and intermediate sealing permits the film to be joined with precision. In conclusion, the reciprocal support of two pairs of peripheric sealing blades enables precise parallelism of the cylinders and of the contact pressure to be kept.

In addition, the feeding system of the products guarantees precise positioning of the products in the correct packing position in the respective chambers.

Naturally, the description made above of an embodiment applying the innovative principles of the present invention is given as example of such innovative principles and therefore must not be taken as limiting within the sphere of the patent herein claimed. For example, if required a number of products can be inserted into each pack by simply carrying out the feeding cycle described above the number of times required, before activating the transversal blades for closing the rear of the bag. The bags can also be fitted with known means of facilitated opening at one end.

## Claims

1. Machine for packing products in a sequence of bags (20) made from sealed films (17, 18), with each bag fitted with two chambers separated from each other by a breakable partition (43), comprising in combination a first compartment (13) of first products (12) destined to be received in one of the two chambers of each bag, a second compartment (33) of second products destined to be received in the other of the two chambers of each bag, first (11) and second (34) devices for feeding respectively the first and the second products from their own compartments to a packing area (21), means (15, 16) of longitudinal sealing of the film to carry out side sealings and an intermediate sealing between them, all extended in the feeding direction of the film, and means (19) of transversal sealing of the film at intervals between the bags; the longitudinal sealing means comprise a first pair of sealing rollers (15) and a second pair of sealing rollers (16) positioned in sequence along the path of the film, the film passing between the rollers of the pairs in two overlaying layers (17, 18) to be sealed longitudinally, one pair of rollers having three sealing blades (36, 38) to carry out said side sealings and said intermediate sealing (37), and the other pair of rollers having two sealing blades (39, 40) to carry out itself said side sealings and make the final side sealings final more resistant than said intermediate sealing that thus forms said breakable partition.

2. Machine according to claim 1, **characterised in that** the first and the second pair of rollers have independent means (35) for regulating the sealing pressure to obtain the required different resistance of the side sealings and the intermediate sealing.

3. Machine according to claim 1, **characterised in that** in the packing area (21), upstream of the transversal sealing means (19), a duct (45) for feeding the first products and a duct (46) for feeding the second products finish, both ducts being extended in the direction of the flow of the film to pass between the rollers of the pairs of rollers and supplied by the respective feeding devices (11, 34).

4. Machine according to claim 1, **characterised in that** the first feeding devices (11) are suitable for feeding a solid product (12) in the packing area (21) which is positioned with its transversal extension in the direction of flow of the film.

5. Machine according to claim 4, **characterised in that** the first feeding devices (11) comprise a first box feeder (25) and a second box feeder (31); the first box feeder (25) has a feeding channel (32) into which a product to pack enters from the first compartment, this feeding channel (32) ending at a corner within the feeding channel (28) of the second box feeder (31), the channel (28) of the second box feeder extending with a duct (45) in the feed direction of the film and between longitudinal sealings up to reach the area (21) for forming the bag before the transversal sealing means (19).

6. Machine according to claim 5, **characterised in that** the outfeed of the first compartment (13) has a sorting drum (23) with peripheric seats for the reception and sequential orderly transversal transport of the products for feeding them into the channel (32) of the first box feeder.

7. Machine according to claim 1, **characterised in that** the second feeding devices (34) are suitable for feeding a fluid product in the packing area (21).

8. Machine according to claim 7, **characterised in that** the fluid product is fed through a duct (46) extended in the flow direction of the film until it reaches the area (21) in which the bag is formed before the transversal sealing means (19) and replenished by the second feeding devices (34).
